# EUROPEAN PATENT APPLICATION

(11) **EP 2 602 753 A1**
(43) Date of publication of application: **12.06.2013**
(21) Application number: 10855494.0
(22) Date of filing: 05.08.2010
(51) Int. Cl.: G06Q 20/00

(54) **NETWORK SECURE PAY-AS-YOU-GO SYSTEM**

(71) Applicant: Hsiao, Cheng-Hao, Taichung City 173 (TW)
(72) Inventor: Hsiao, Cheng-Hao, Taichung City 173 (TW)
(74) Representative: Chaillot, Geneviève
(86) International application number: PCT/CN2010/001192
(87) International publication number: WO 2012/016356

(57) **Abstract**

The present technical scheme relates to a network secure pay-as-you-go system, especially to a network secure pay-as-you-go system capable of confirming the identities of buyers and sellers in advance. The system includes a transaction platform unit, at least one buyer processing end and at least one seller processing end. The transaction platform unit provides at least one vending message distribution, and the transaction platform unit has at least one entity account. The buyer processing end can connect with the transaction platform unit through the Internet, and the buyer processing end has at least one buyer bank account of an entity financial institution. The seller processing end connects with the transaction platform unit through the Internet, and the seller processing end has at least one seller bank account of the entity financial institution. The identities of buyers and sellers are confirmed in advance when the entity financial institution opens an account, and buyers prepay money to the network transaction platform when the buyers purchase merchandise, and a network transaction construction end pays money to the sellers after completing the transaction. The system reduces the phenomenon of the transaction on behalf of others such that the security in transaction is improved.

## Description

### Field of the invention

The present invention relates to an Network secure pay-as-you-go system, more particularly, the present invention relates to an Network secure pay-as-you-go system which is able to identify individual and ensure transaction security. Thus the buyer and the seller are unable to trade by fake identities due to insidious Internet environment. The dispute caused by Internet transaction can thus be reduced.

### Background of the invention

Recently, in benefit of highly developed Internet technologies and widely application thereof, Internet shopping becomes a common consuming channel. Many bidding websites and shopping websites are raised. In conventional Internet shopping technologies, it is unable to provide a secure transaction platform, which results in cheating trades. For example: buyer has already paid but did not receive merchandise, or seller has already shipped the merchandise but did not receive the payment, or the seller fraud on buyer by unfaithful advertisement. Even worse, the buyer or the seller use other person's identities or fake credit card in doing business. Or the registration information of buyer or seller are incomplete, which results in that the administrator of the Internet transaction platform is unable to manage the registration. The aforementioned status results in higher risk when doing transaction in bidding websites and shopping websites.

To solve the risk in Internet transaction, the industries developed many Internet transaction secure apparatus, deliver flow control, and money flow control. Taiwan Patent No. I254230 disclosed a "Real-Time messaging E-Business System". Taiwan Patent No. I229278 disclosed a "merchandise transaction and agency process system by using computer". Taiwan Patent No. I321760 disclosed a "Internet business, bidding transaction confirmation method and calculation". Taiwan Patent No. I322386 disclosed a "Method for Securing Transactions Carried out Remotely Across an Open Communication Network". Taiwan Patent No. I309392 disclosed a "Internet payment method and system". Taiwan Patent No. M329213 disclosed a "Internet sales organization with the function of credit control ". Taiwan Patent No. M361066 disclosed a "Payment and delivery device for network transaction".

But the aforementioned Internet transaction system or method can only check identities or control credit via Internet or telephone communication, which is not efficient in preventing fake identities transaction, using other's account, or trading in defective/fake merchandise. Once the buyer pays with other's identities or the seller does not ship merchandise, the transaction dispute would occur, and the transaction security would fail. Thus, in conventional technologies, there are still disadvantages and the conventional Internet transaction system is unable to meet demands of transaction security.

Thus, by applying the aforementioned technical means, the Internet transaction of the present invention is able to confirm identities of buyer/seller when the buyer/seller apply for accounts in front of entity financial institutions. And a payment is delivered to the transaction platform unit before the buyer purchases merchandise. After the transaction is confirmed, the transaction platform unit then delivers the payment to the seller. Thus fake transaction and transaction dispute can be reduced and the Internet transaction security can be improved.

### Summary of the invention

The objective of the present invention is to provide an Network secure pay-as-you-go system with preconfirming identities of buyer/seller. Thus the fake identities transaction, using other's account, or trading in defective/fake merchandise can be prevented, and the Internet transaction security can be improved.

Comparing with conventional technologies, the Network secure pay-as-you-go system can achieve the aforementioned objective comprises:
at least one transaction platform unit managed by a Network transaction construction end, at least one buyer processing end managed by the buyer and at least one seller processing end managed by the seller;
transaction platform unit, being applied for member registration of buyer and seller, wherein the seller is able to announce at least one vending message for the buyer to search for and then a shopping message is formed, and a match is able to be made to form a transaction, wherein the Network transaction construction end has a entity account within a entity financial institution, and the entity account is applied in the transaction platform to form a transaction entity account based on each transaction message;
a buyer processing end, being configured to connect to the transaction platform via smart grid or Internet, wherein the buyer can register as a member in the transaction platform via the buyer processing end, wherein the buyer is able to apply for a identities account in the entity financial institution which is identical to the member account, wherein when the buyer registers in the transaction platform as a member via the buyer processing end, the buyer would register the identities account of the entity financial institution in the transaction platform unit; and
a seller processing end, being configured to connect to the transaction platform via smart grid or Internet, wherein the seller can register as a member in the transaction platform via the seller processing end, wherein the seller is able to apply for a identities account in the entity financial institution which is identical to the member account, wherein when the seller registers in the transaction platform as a member via the seller processing end, the seller would register the identities account of the entity financial institution in the transaction platform unit.

Thus, by the aforementioned means, the Internet transaction of the present invention is able to identify the buyer and the seller when they applied account in front of the entity financial institution. And the buyer is able to prepay to the Internet transaction platform, and after the transaction is confirmed, the Internet transaction platform can deliver the payment to the seller. Thus, fake transaction can be prevented and the Internet transaction security is ensured.

### Brief description of the drawings

Fig. 1 shows the block diagram of the Network secure pay-as-you-go system of the present invention comprising relation between all devices;
Fig. 2 shows the block diagram of the Network secure pay-as-you-go system of the present invention that how the buyer/seller complete transaction in real operation;
Fig. 3 shows the block diagram of the Network secure pay-as-you-go system of the present invention that how the buyer does not accept the merchandise in real operation;

### Parts No.

1 transaction platform unit
15 entity account
2 buyer processing end
25 buyer bank account
3 seller processing end
35 seller bank account
201 seller announces a vending message
202 buyer c deliver shopping message
203 transaction completed message
203A a payment message of the entity account
204 transfer payment to the entity account of the transaction platform unit 1
205 send out a payment due received information and buyer shipping information to the seller processing end
206 send out a shipping message
207 deliver the shipping message
210 seller informs the transaction platform unit via the seller processing end after the seller confirms the payment
211 delivers transaction completed message to the buyer processing end and the seller processing end
408 When the buyer receives defeated merchandise or the merchandise is not delivered on time, the buyer can note the status and then inform transaction platform unit 1 via buyer processing end
409 remain the payment of entity account in the entity account of the transaction platform unit
409A If the buyer wants to wait for the merchandise, the transaction platform unit then provides renewed shipping schedule via the seller processing end 410 the transaction platform unit sends out transaction cancellation message to the buyer processing end and the seller processing end.

### Detailed description of the invention

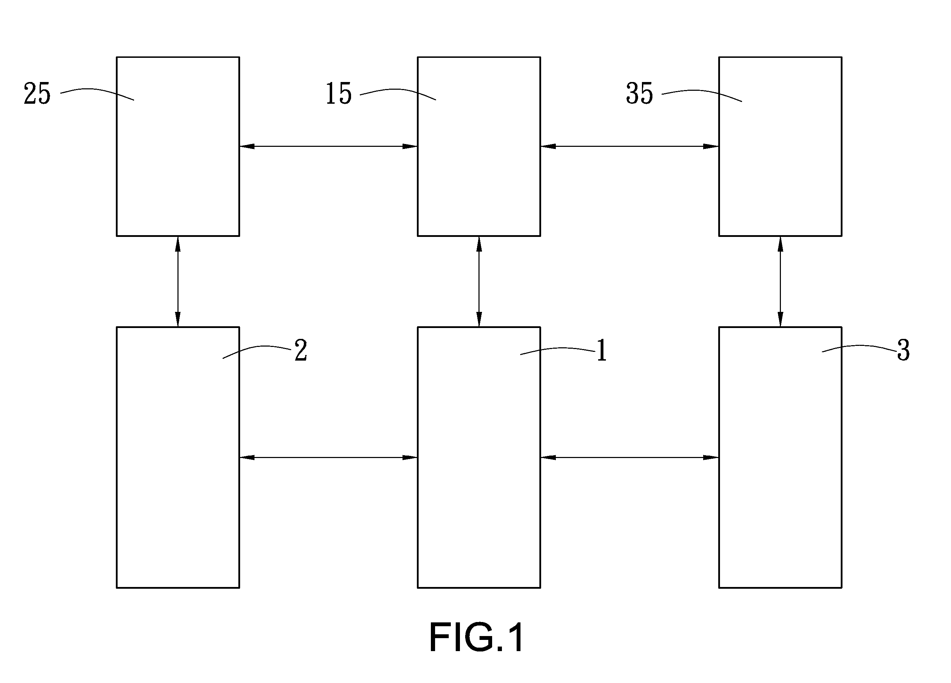

Refer to Fig. 1, which shows the Internet security payment system mainly comprising a transaction platform unit 1 managed by a Network transaction construction end, at least one buyer processing end 2 managed by buyer, and at least one seller processing end 3 managed by seller.

The transaction platform unit 1 has backstage managed by the Network transaction construction end, which is applied for member registration of buyer and seller, wherein at least one seller is able to announce at least one vending message for the buyer to search for and then a shopping message is formed, and a match is able to be made to form a transaction by matching the vending message and the shopping message, then a transaction message is formed. The Network transaction construction end has a entity account 15 within a entity financial institution (or in different entity financial institution), and the entity account 15 is applied in the transaction platform unit 1 to form a transaction entity account based on each transaction message for payment control during transaction.

The buyer processing end 2 is configured to connect to the transaction platform unit 1 via smart grid or Internet, wherein the buyer can register as a member in the transaction platform unit 1 via the buyer processing end 2. The buyer can apply the member account for registering personal information and sending out searching merchandise message or shopping message in transaction platform unit 1 in front of the buyer processing end 2. The buyer is able to apply for a buyer identities account 25 in the entity financial institution which is identical to the member account, wherein when the buyer registers in the transaction platform unit 1 as a member via the buyer processing end 2, the buyer would register the buyer identities account 25 of the entity financial institution in the transaction platform unit 1 for payment control during transaction. The transaction platform unit 1 is able to review the buyer when the entity financial institution reviews the buyer's account application, or the entity financial institution can control risk of the buyer's account by verifying the buyer's identities in advance.

The seller processing end 3 is configured to connect to the transaction platform unit 1 via smart grid or Internet, wherein the seller can register as a member in the transaction platform unit 1 via the seller processing end 3. The seller can apply the member account for registering personal information and sending out vending message in transaction platform unit 1 in front of the seller processing end 3. The seller is able to apply for a Seller identities account 35 in the entity financial institution which is identical to the member account, wherein when the seller registers in the transaction platform unit 1 as a member via the seller processing end 35, the seller would register the seller identities account 35 of the entity financial institution in the transaction platform unit 1 for payment control during transaction. The transaction platform unit 1 is able to review the seller when the entity financial institution reviews the seller's account application, or the entity financial institution can control risk of the seller's account by verifying the seller's identities in advance. Thus, an Network secure pay-as-you-go system with efficient buyer/seller identities verification and low transaction dispute is ensured.

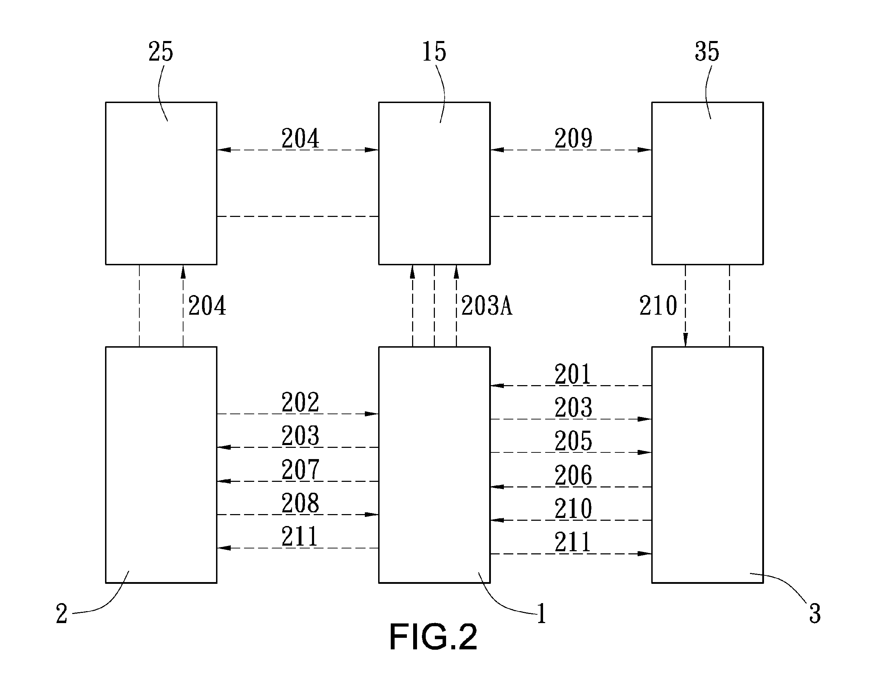

Fig. 2 shows how to apply present invention in real buyer/seller transaction. When the seller announces a vending message on the transaction platform unit 1 provided by the Network transaction construction end via the seller processing end 3 (Step 201), the buyer can search the vending message on the transaction platform unit 1 via the buyer processing end 2. And the buyer can deliver shopping message to the transaction platform unit 1 via the buyer processing end 2 to the seller processing end 3 (Step 202). The transaction platform unit 1 would generate a selection message to the seller processing end 3. If the seller processing end receives the transaction, the transaction platform unit 1 would generate a transaction completed message (or the seller processing end cancel the transaction, and the transaction platform unit 1 would generate a cancel message) and send the message to the buyer processing end 2 as well as to the seller processing end 3 (Step 203). The buyer processing end 2 would show a payment message of the entity account on the transaction platform unit 1 (Step 203A). Also the buyer transfer payment to the entity account 15 of the transaction platform unit 1 via the registered buyer bank account 25 by the buyer processing end 2 (Step 204). The transaction platform unit 1 would confirm the payment is delivered from the buyer bank account 25 with the same identities confirmation account as the buyer and then send out a payment due received information and buyer shipping information to the seller processing end 3 (Step 205). The seller then ships merchandise to the buyer and sends out a shipping message to the transaction platform unit 1 via the seller processing end 3 (Step 206). The transaction platform unit 1 then delivers the shipping message to the buyer processing end 2 (Step 207). The buyer informs the transaction platform unit 1 via the buyer processing end 2 after receiving and checking the merchandise (Step 208). The transaction platform unit 1 delivers the payment to the seller bank account 35 with the same identities confirmation account as the seller via the entity account 15 after the transaction platform unit 1 receives the shipping completed message (Step 209). And the seller informs the transaction platform unit 1 via the seller processing end 3 after the seller confirms the payment (Step 210). Finally, the transaction platform unit 1 delivers transaction completed message to the buyer processing end 2 and the seller processing end 3 (Step 211).

Through the aforementioned operation, the buyer and the seller can apply buyer bank account 25 and seller bank account 35 respectively in entity financial institution, and the entity financial institution will check the buyer's identities and the seller's identities. Since the buyer and the seller, when registering as a member in transaction platform unit 1, have to use the same identities for account identification, the buyer's identities and the seller's identities can be identified. And, since the buyer's identities and the seller's identities are confirmed when the buyer bank account 25 and the seller bank account 35 are created, it is efficient to prevent using other's account for transaction. Once transaction dispute happens, the Network transaction construction end is easy to determine the responsibility of buyer and seller. Then the transaction can be ensured, or the payment can be reimbursed, or the merchandise can be returned. Thus the Internet transaction security can be ensured.

When the seller cancels the transaction or the seller does not confirm timely, the seller processing end 3 will deliver transaction cancellation message to the transaction platform unit 1. Or when the seller does not reply within a predetermined time period of selection message, the transaction platform unit 1 would determine to cancel the transaction, then the transaction platform unit 1 would deliver seller cancellation message to both the buyer processing end 2 and the seller processing end 3.

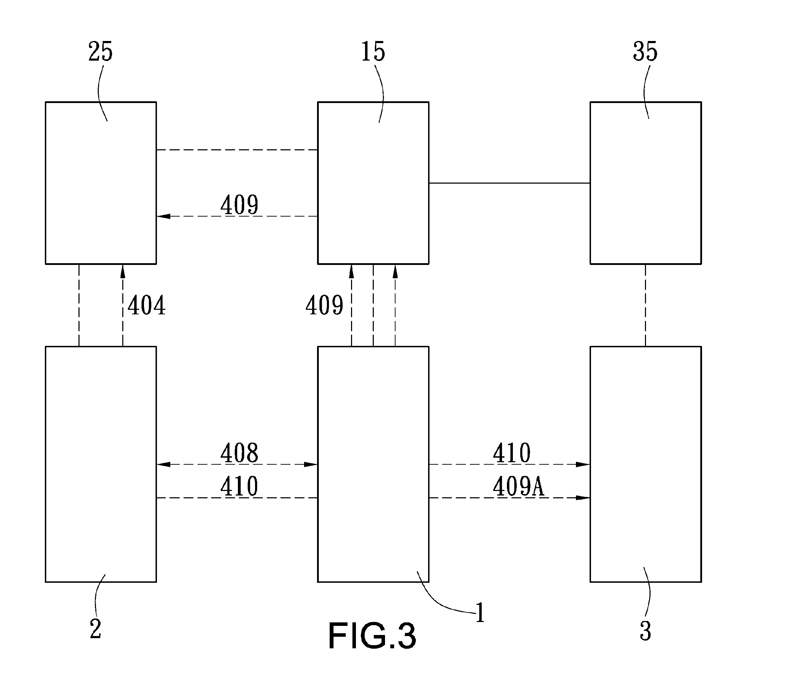

When the buyer receives defeated merchandise or the merchandise is not delivered on time, as shown in Fig. 3, the buyer can note the status and then inform transaction platform unit 1 via buyer processing end 2 (Step 408). The transaction platform unit 1 then transfers the "not delivered on time" message to the seller processing end 3 via the transaction platform unit 1 after the transaction platform unit 1 receives the "not delivered on time" message from the buyer. The seller deals with the situation and replies to the transaction platform unit 1. If the merchandise is not delivered on time, the buyer can cancel the transaction in Step 408, and the transaction platform unit 1 then remain the payment of entity account 15 in the entity account 15 of the transaction platform unit 1 (Step 409). The transaction platform unit 1 sends out transaction cancellation message to the buyer processing end 2 and the seller processing end 3 (Step 410). If the buyer wants to wait for the merchandise in Step 408, the transaction platform unit 1 then provides renewed shipping schedule via the seller processing end 3 (Step 409A). When the buyer receives and checks merchandise, the buyer can, as shown in Fig. 2, inform transaction platform unit 1 via the buyer processing end 2 (Step 208). The transaction platform unit 1 delivers the payment to the seller bank account 35 with the same identities confirmation account as the seller via the entity account 15 after the transaction platform unit 1 receives the shipping completed message (Step 209). And the seller informs the transaction platform unit 1 via the seller processing end 3 after the seller confirms the payment (Step 210). Finally, the transaction platform unit 1 delivers transaction completed message to the buyer processing end 2 and the seller processing end 3 (Step 211).

If the merchandise is defeated after checking, the buyer can choose to cancel the transaction in Step 408, and the Network transaction construction end will mitigate the situation. If both parties agree to cancel the transaction or the mitigation determines to cancel the transaction, the transaction platform unit 1 then return the payment of entity account 15 to the same buyer's bank account 25 (Step 409). And then the transaction platform unit 1 sends out transaction cancellation message to the buyer processing end 2 and the seller processing end 3 (Step 410).

If both parties agree to replace defeated merchandise, the buyer can note "replace defeated merchandise" in Step 408, and the transaction platform unit 1 then provides renewed shipping schedule via the seller processing end 3 (Step 409A). When the buyer receives and checks merchandise, the buyer can, as shown in Fig. 2, inform transaction platform unit 1 via the buyer processing end 2 (Step 208). The transaction platform unit 1 delivers the payment to the seller bank account 35 with the same identities confirmation account as the seller via the entity account 15 after the transaction platform unit 1 receives the shipping completed message (Step 209). And the seller informs the transaction platform unit 1 via the seller processing end 3 after the seller confirms the payment (Step 210). Finally, the transaction platform unit 1 delivers transaction completed message to the buyer processing end 2 and the seller processing end 3 (Step 211). Or the transaction platform unit 1 mitigates the situation. If both parties agree to complete the transaction or the mitigation determines to complete the transaction, as shown in Fig. 2, The transaction platform unit 1 delivers the payment to the seller bank account 35 with the same identities confirmation account as the seller via the entity account 15 (Step 209). And the seller informs the transaction platform unit 1 via the seller processing end 3 after the seller confirms the payment (Step 210). Finally, the transaction platform unit 1 delivers transaction completed message to the buyer processing end 2 and the seller processing end 3 (Step 211).

The aforementioned description exemplarily explains the present invention and is not intended to limit the present invention. People skilled in the art can modify the present invention within the scope and spirit of the claims after understands the present invention, which should be deemed as within the scope of protection of the claims of the present invention.

## Claims

1. An Network secure pay-as-you-go system, comprising:
a transaction platform unit, being applied for member registration of buyer and seller, wherein the seller is able to announce at least one vending message for the buyer to search for and then a shopping message is formed, and a match is able to be made to form a transaction;
at least one buyer processing end, being configured to connect to the transaction platform via smart grid or Internet, wherein the buyer can register as a member in the transaction platform via the buyer processing end, wherein the buyer is able to apply for a identities account in the entity financial institution which is identical to the member account, wherein when the buyer registers in the transaction platform as a member via the buyer processing end, the buyer would register the identities account of the entity financial institution in the transaction platform unit; and
at least one seller processing end, being configured to connect to the transaction platform via smart grid or Internet, wherein the seller can register as a member in the transaction platform via the seller processing end, wherein the seller is able to apply for a identities account in the entity financial institution which is identical to the member account, wherein when the seller registers in the transaction platform as a member via the seller processing end, the seller would register the identities account of the entity financial institution in the transaction platform unit.

2. The Network secure pay-as-you-go system as claimed in claim 1, wherein the transaction platform unit has a backstage managed by the transaction platform unit, and the transaction platform unit has a entity account within a entity financial institution, and the entity account is applied in the transaction platform to form a transaction entity account based on each transaction message.

3. The Network secure pay-as-you-go system as claimed in claim 1, wherein the transaction platform unit further has a shopping message, when the buyer processing end searches for a vending message in the transaction platform unit and is willing to purchase, the buyer deliver the shopping message to the seller processing end via the transaction platform unit, if the seller processing end accepts the transaction, the transaction platform unit then forms a transaction completed message and sends it out to the buyer processing end and the seller processing end, also a payment message showing entity account of the transaction platform unit is shown on the buyer processing end, and the buyer transfers payment by the buyer processing end to the entity account of the transaction platform unit according to instruction from the buyer bank account which is registered in the transaction platform unit in advance.

4. The Network secure pay-as-you-go system as claimed in claim 1, wherein the transaction platform unit is configured to review the seller when the entity financial institution reviews the seller's account application, or the entity financial institution can control risk of the seller's account by verifying the seller's identities in advance.
